# EUROPEAN PATENT SPECIFICATION

(11) **EP 1 629 034 B1**
(45) Date of publication and mention of the grant of the patent: **14.03.2007**
(21) Application number: 04754150.3
(22) Date of filing: 03.06.2004
(51) Int. Cl.: C08J 9/14

(54) **PENTAFLUOROBUTANE-BASED COMPOSITIONS**
ZUSAMMENSETZUNG AUF BASIS VON PENTAFLUORBUTAN
COMPOSITIONS A BASE DE PENTAFLUOROBUTANE

(30) Priority: 04.06.2003 US 454265
(43) Date of publication of application: 01.03.2006
(73) Proprietor: Honeywell International Inc., Morristown, New Jersey 07960 (US)
(72) Inventor: BOGDAN, Mary, C., Buffalo, NY 14206 (US); WILLIAMS, David, J., East Amherst, NY 14051 (US); TUNG, Hsuehsung, Getzville, NY 14068 (US); PHAM, Hang, T., Amherst, NY 14228 (US); BEMENT, Leslie, Buffalo, NY 14210 (US)
(74) Representative: Hucker, Charlotte Jane
(86) International application number: PCT/US2004/017482
(87) International publication number: WO 2004/108809

(56) References cited:
- EP-A- 0 883 662
- US-A1- 2003 030 032
- US-B1- 6 303 668
- US-B1- 6 365 566

## Description

### CROSS REFERENCE TO RELATED APPLICATIONS

The present invention is related to and claims the priority benefit of copending United States Application No. 10/161,361, filed June 3, 2002, which is incorporated herein by reference.

### FIELD OF INVENTION

The present invention relates generally to compositions of pentafluorobutane. More specifically, the present invention provides azeotrope-like compositions comprising pentafluorobutane and uses thereof.

### BACKGROUND

Fluorocarbon based fluids have found widespread use in industry in a number of applications, including as refrigerants, aerosol propellants, blowing agents, heat transfer media, and gaseous dielectrics. Because of the suspected environmental problems associated with the use of some of these fluids, it is desirable to use fluids having low or even zero ozone depletion potential, such as hydrofluorocarbons ("HFC's").

Thus, the use of fluids that do not contain chlorofluorocarbons ("CFCs") or hydrochlorofluorocarbons ("HCFCs") is desirable. Additionally, it is known that the use of single component fluids or azeotropic mixtures, which mixtures do not fractionate on boiling and evaporation, is desirable. Unfortunately, as is known in the art, HFC/non-HFC mixtures tend to undergo a significant change in boiling point for a relatively small change in the relative concentrations of the HFC/non-HFC constituents in the mixture. Thus, even where one particular combination of two or more HFC/non-HFC compounds is deemed suitable for use in a given application, other combinations of the same two or more HFC/non-HFC components, which differ only slightly in the relative concentrations of the HFC/non-HFC components, may be unsuitable for the same application.

Applicants have come to appreciate that mixtures of two or more HFC and non-HFC solvents having relatively constant boiling points and vapor pressures, that is, boiling points and vapor pressures that change by a relatively small degree as the relative concentration of the constituents changes, are desirable. In the manufacture of such mixtures, the relatively constant boiling point/vapor pressures would allow a wider range of compositions to be used for a given application. Unfortunately, HFC/non-HFC mixtures having such relatively constant boiling point and vapor pressure properties are not only uncommon, but the existence of such mixtures can not generally be predicted in advance.

### DETAILED DESCRIPTION OF THE INVENTION AND PREFERRED EMBODIMENTS

The present inventors have developed compositions that can help to satisfy the continuing need for substitutes for CFCs and HCFCs. In one embodiment, the present invention provides azeotrope-like compositions comprising pentafluorobutane and butane; preferably n-butane. Thus, the present invention overcomes the aforementioned shortcomings by providing compositions that are substantially free of CFCs and HCFCs and which exhibit relatively constant boiling point and vapor pressure characteristics. Specifically, the applicants have identified azeotrope-like compositions comprising 1,1,1,3,3,-pentafluorobutane ("HFC-365mfc") and a second component selected from the group consisting of unsubstituted butanes, preferably n-butane.

As used herein, the term "azeotrope-like" is intended in its broad sense to include both compositions that are strictly azeotropic and compositions that behave like azeotropic mixtures. From fundamental principles, the thermodynamic state of a fluid is defined by pressure, temperature, liquid composition, and vapor composition. An azeotropic mixture is a system of two or more components in which the liquid composition and vapor composition are equal at a given pressure and temperature. In practice, this means that the components of an azeotropic mixture are constant boiling and cannot be separated during a phase change.

Azeotrope-like compositions are constant boiling or essentially constant boiling. In other words, for azeotrope-like compositions, the composition of the vapor formed during boiling or evaporation is identical, or substantially identical, to the original liquid composition. Thus, with boiling or evaporation, the liquid composition changes, if at all, only to a minimal or negligible extent. This is to be contrasted with non-azeotrope-like compositions in which, during boiling or evaporation, the liquid composition changes to a substantial degree. All azeotrope-like compositions of the invention within the indicated ranges as well as certain compositions outside these ranges are azeotrope-like.

The azeotrope-like compositions of the invention may include additional components that do not form new azeotropic or azeotrope-like systems, or additional components that are not in the first distillation cut. The first distillation cut is the first cut taken after the distillation column displays steady state operation under total reflux conditions. One way to determine whether the addition of a component forms a new azeotropic or azeotrope-like system so as to be outside of this invention is to distill a sample of the composition with the component under conditions that would be expected to separate a non-azeotropic mixture into its separate components. If the mixture containing the additional component is non-azeotropic or non-azeotrope-like, the additional component will fractionate from the azeotropic or azeotrope-like components. If the mixture is azeotrope-like, some finite amount of a first distillation cut will be obtained that contains all of the mixture components that is constant boiling or behaves as a single substance.

It follows from this that another characteristic of azeotrope-like compositions is that there is a range of compositions containing the same components in varying proportions that are azeotrope-like or constant boiling. All such compositions are intended to be covered by the terms "azeotrope-like" and "constant boiling". As an example, it is well known that at differing pressures, the composition of a given azeotrope will vary at least slightly, as does the boiling point of the composition. Thus, an azeotrope of A and B represents a unique type of relationship, but with a variable composition depending on temperature and/or pressure. It follows that, for azeotrope-like compositions, there is a range of compositions containing the same components in varying proportions that are azeotrope-like. All such compositions are intended to be covered by the term azeotrope-like as used herein.

### Pentafluorobutane/ n-butane

One embodiment of the present invention provides azeotrope-like compositions comprising HFC-365mfc and n-butane. Preferably, the novel azeotrope-like compositions of the present invention comprise effective amounts of HFC-365mfc and n-butane. The term "effective amounts" as used herein refers to the amount of each component which upon combination with the other component or components, results in the formation of the present azeotrope-like compositions. These embodiments preferably provide azeotrope-like compositions comprising, and preferably consisting essentially of, from about 1 to about 50 parts by weight HFC-365mfc and from about 50 to about 99 parts by weight of n-butane, and even more preferably from about 5 to about 25 parts by weight HFC-365mfc and from about 75 to about 95 parts by weight of n-butane Such compositions are characterized by a boiling point of about -1.64 °C ± 4 °C, preferably ± 2 °C, more preferably ± 1 °C at about 14.41 psia.

In preferred embodiments, the HFC-365mfc/butane compositions of the present invention are substantially homogeneous azeotropic compositions.

### Pentafluorobutane/ n-butane/water

One embodiment of the present invention provides azeotrope-like compositions comprising HFC-365mfc, n-butane and water. Preferably, the novel azeotrope-like compositions of the present invention comprise effective amounts of HFC-365mfc, n-butane and water. These embodiments preferably provide azeotrope-like compositions comprising, and preferably consisting essentially of, from about 1 to about 50 parts by weight HFC-365mfc, from about 49 to about 99 parts by weight of n-butane, and from about 0.1 to about 15 parts by weight of water. Such compositions are characterized by a boiling point of about -1.66°C ± 4 °C, preferably ± 2°C, more preferably ± 1°C at about 14.41 psia.

The preferred, more preferred, and most preferred compositions of this embodiment are set forth in Table 1 below. The numerical ranges in Table 1 are to be understood to be prefaced by the term "about".

**Table 1**

| Components | Preferred (wt %) | More Preferred (wt %) | Most Preferred (wt %) |
|---|---|---|---|
| HFC-365mfc | 1-50 | 5-40 | 10-20 |
| n-butane | 49-99 | 60-90 | 65-85 |
| Water | 0.1-15 | 0.5-12 | 1-10 |

In preferred embodiments, the HFC-365mfc/butane/water compositions of the present invention are heterogenous azeotropic compositions.

### Uses of the compositions

The present compositions have utility in a wide range of applications, including as substitutes for CFCs and HCFCs. For example, one embodiment of the present invention relates to the use of the present compositions as propellants/solvents in sprayable compositions. In general, sprayable-type compositions comprise a material to be sprayed and a propellant/solvent or mixture of propellant solvents. The present compositions are also useful as solvents, blowing agents, refrigerants, cleaning agents and aerosols.

One embodiment of the present invention relates to a blowing agent comprising one or more of the azeotrope-like compositions of the invention. In other embodiments, the invention provides foamable compositions, and preferably polyurethane and polyisocyanurate foam compositions, and methods of preparing foams. In such foam embodiments, one or more of the present azeotrope-like compositions are included as a blowing agent in a foamable composition, which composition preferably includes one or more additional components capable of reacting and foaming under the proper conditions to form a foam or cellular structure, as is well known in the art. The present methods preferably comprise providing such a foamable composition and reacting it under conditions effective to obtain a foam, and preferably a closed cell foam. The invention also relates to foam, and preferably closed cell foam, prepared from a polymer foam formulation containing a blowing agent comprising one or more of the azeotrope-like compositions of the invention. Any of the methods well known in the art, such as those described in "Polyurethanes Chemistry and Technology," Volumes I and II, Saunders and Frisch, 1962, John Wiley and Sons, New York, NY, which is incorporated herein by reference, may be used or adapted for use in accordance with the foam embodiments of the present invention. In general, such preferred methods comprise preparing polyurethane or polyisocyanurate foams by combining an isocyanate, a polyol or mixture of polyols, a blowing agent or mixture of blowing agents comprising one or more of the present compositions, and other materials such as catalysts, surfactants, and optionally, flame retardants, colorants, or other additives. It is convenient in many applications to provide the components for polyurethane or polyisocyanurate foams in pre-blended formulations. Most typically, the foam formulation is pre-blended into two components. The isocyanate and optionally certain surfactants and blowing agents comprise the first component, commonly referred to as the "A" component. The polyol or polyol mixture, surfactant, catalysts, blowing agents, flame retardant, and other isocyanate reactive components comprise the second component, commonly referred to as the "B" component. Accordingly, polyurethane or polyisocyanurate foams are readily prepared by bringing together the A and B side components either by hand mix for small preparations and, preferably, machine mix techniques to form blocks, slabs, laminates, pour-in-place panels and other items, spray applied foams, froths, and the like. Optionally, other ingredients such as fire retardants, colorants, auxiliary blowing agents, and even other polyols can be added as a third stream to the mix head or reaction site. Most conveniently, however, they are all incorporated into one B-component as described above.It is also possible to produce thermoplastic foams using the compositions of the invention. For example, conventional foam polyurethanes and isocyanurate formulations may be combined with the azeotrope-like compositions in a conventional manner to produce rigid foams.

Azeotrope-like mixtures containing HFC-365mfc in accordance with the present invention are particularly suitable as foam blowing agents. Of particular interest are those azeotrope-like compositions of the present invention that optionally further contain other zero ozone depleting materials, such as, for example, other hydrofluorocarbons, e.g., difluoromethane (HFC-32); difluoroethane (HFC-152); trifluoroethane (HFC-143); tetrafluoroethane (HFC-134); pentafluoroethane (HFC-125); pentafluoropropane (HFC-245); hexafluoropropane (HFC-236); heptafluoropropane (HFC-227); and inert gases, e.g., air, nitrogen, carbon dioxide. Where isomerism is possible for the hydrofluorocarbons mentioned above, the respective isomers may be used either singly or in the form of a mixture.

Dispersing agents, cell stabilizers, and surfactants may also be incorporated into the blowing agent mixture. Surfactants, including the well known silicone oils, are added to serve as cell stabilizers. Some representative materials are sold under the names of DC-193, B-8404, and L-5340 which are, generally, polysiloxane polyoxyalkylene block co-polymers such as those disclosed in U.S. Patent Nos. 2,834,748,2,917,480, and 2,846,458. Other optional additives for the blowing agent mixture may include flame retardants such as tri(2-chloroethyl)phosphate, tri(2-chloropropyl)phosphate, tri(2,3-dibromopropyl)-phosphate, tri(1,3-dichloropropyl)phosphate, diammonium phosphate, various halogenated aromatic compounds, antimony oxide, aluminum trihydrate, polyvinyl chloride, and the like.

In another embodiment, the azeotrope-like compositions of this invention may be used as propellants in sprayable compositions, either alone or in combination with known propellants. The sprayable composition comprises, consists essentially of, and consists of a material to be sprayed and a propellant comprising, consisting essentially of, and consisting of the azeotrope-like compositions of the invention. Inert ingredients, solvents, and other materials may also be present in the sprayable mixture. Preferably, the sprayable composition is an aerosol. Suitable materials to be sprayed include, without limitation, cosmetic materials such as deodorants, perfumes, hair sprays, cleansers, and polishing agents as well as medicinal materials such as anti-asthma and anti-halitosis medications.

In another process embodiment, a process for removing water from HFC-365mfc is provided, which process comprises the step of distilling a mixture of HFC-365mfc, water and a butane to separate an azeotrope-like composition consisting essentially of HFC-365mfc, the butane and water. Thus, an azeotrope-like mixture of HFC-365mfc, water and a butane can be used to remove bulk amounts of water in a HFC-365mfc manufacturing process. In another embodiment of the invention, a process is provided in which a mixture of HFC-365, water and butane is phase separated to remove bulk amounts of water before conducting said distillation step. Residual amounts of water in the HFC-365mfc phase can be distilled out because of the existence of the azeotropes. Subsequent distillation or multiple distillations can be used to remove trace amounts of water along with other impurities to achieve the desired purity.

The components of the composition of the invention are known materials that are commercially available or may be prepared by known methods. Preferably, the components are of sufficiently high purity so as to avoid the introduction of adverse influences upon cooling or heating properties, constant boiling properties, or blowing agent properties of the system. In the case of metered dose inhalers, the relevant current Good Manufacturing Process may be used for manufacturing these materials.

Additional components may be added to tailor the properties of the azeotrope-like compositions of the invention as needed. By way of example, oil solubility aids may be added in the case in which the compositions of the invention are used as refrigerants. Stabilizers and other materials may also be added to enhance the properties of the compositions of the invention.

## Claims

1. An azeotrope-like composition comprising 1,1,1,3,3-pentafluorobutane and n-butane.

2. The azeotrope-like composition of claim 1 **characterized by** a constant boiling point of about -1.64 °C ± 4 °C at about 14.41 psia.

3. The azeotrope-like composition of claim 1 **characterized by** a constant boiling point of about -1.66 °C ± 4 °C at about 14.41 psia.

4. The azeotrope-like composition of claim 1 further comprising water.

5. The azeotrope-like composition of claim 1 consisting essentially of from about 75 to about 95 parts by weight n-butane and from about 5 to about 25 parts by weight of HFC-365mfc.

6. The azeotrope-like composition of claim 4 consisting essentially of from about 65 to about 85 parts by weight n-butane, from about 10 to about 20 parts by weight of by weight HFC-365mfc, and from about 5 to about 15 parts by weight of water.

7. A method for producing a foam comprising foaming a composition containing an azeotrope-like composition of claim 1.

8. A premix of a polyol and a blowing agent comprising a composition of claim 1.

9. A closed cell foam composition prepared by foaming a foamable composition containing an azeotrope-like compositions of claim 1.

10. A blowing agent comprising an azeotrope-like composition of claim 1.

11. A sprayable composition comprising a a material to be sprayed and a propellant comprising an azeotrope-like composition of claim 1.

12. The sprayable composition according to claim 11 wherein the sprayable composition is an aerosol.

13. The sprayable composition according to claim 12 wherein the sprayable composition is a cosmetic material.

14. The sprayable composition according to claim 13 wherein the material to be sprayed is a medicinal material.

15. A refrigerant composition comprising a composition according to claim 1.

16. The azeotrope-like composition of claim 1 consisting essentially of from about 50 to about 99 parts by weight n-butane and from about 1 to about 50 parts by weight of HFC-365mfc.

17. A foamable composition comprising the azeotrope-like composition of claim 1

18. A foamable composition comprising a blowing agent of claim 10.

## Patentansprüche

1. Azeotropartige Zusammensetzung, enthaltend 1,1,1,3,3-Pentafluorbutan und n-Butan.

2. Azeotropartige Zusammensetzung nach Anspruch 1, **gekennzeichnet durch** einen konstanten Siedepunkt von etwa -1,64°C ± 4°C bei etwa 14,41 psi abs.

3. Azeotropartige Zusammensetzung nach Anspruch 1, **gekennzeichnet durch** einen konstanten Siedepunkt von etwa -1,66°C + 4°C bei etwa 14,41 psi abs.

4. Azeotropartige Zusammensetzung nach Anspruch 1, die ferner Wasser enthält.

5. Azeotropartige Zusammensetzung nach Anspruch 1, im wesentlichen bestehend aus etwa 75 bis etwa 95 Gewichtsteilen n-Butan und etwa 5 bis etwa 25 Gewichtsteilen H-FKW 365mfc.

6. Azeotropartige Zusammensetzung nach Anspruch 4, im wesentlichen bestehend aus etwa 65 bis etwa 85 Gewichtsteilen n-Butan, etwa 10 bis etwa 20 Gewichtsteilen H-FKW 365mfc und etwa 5 bis etwa 15 Gewichtsteilen Wasser.

7. Verfahren zur Herstellung eines Schaumstoffs, bei dem man eine Zusammensetzung, die eine azeotropartige Zusammensetzung nach Anspruch 1 enthält, verschäumt.

8. Vormischung aus einem Polyol und einem eine Zusammensetzung nach Anspruch 1 enthaltenden Blähmittel.

9. Geschlossenzellige Schaumstoffzusammensetzung, hergestellt durch Verschäumen einer verschäumbaren Zusammensetzung, die eine azeotropartige Zusammensetzung nach Anspruch 1 enthält.

10. Blähmittel, das eine azeotropartige Zusammensetzung nach Anspruch 1 enthält.

11. Versprühbare Zusammensetzung, die ein zu versprühendes Material und eine azeotropartige Zusammensetzung nach Anspruch 1 enthält.

12. Versprühbare Zusammensetzung nach Anspruch 11, bei der es sich um ein Aerosol handelt.

13. Versprühbare Zusammensetzung nach Anspruch 12, bei der es sich um eine kosmetische Substanz handelt.

14. Versprühbare Zusammensetzung nach Anspruch 13, bei der es sich um eine medizinische Substanz handelt.

15. Kältemittelzusammensetzung, die eine Zusammensetzung nach Anspruch 1 enthält.

16. Azeotropartige Zusammensetzung nach Anspruch 1, im wesentlichen bestehend aus etwa 50 bis etwa 99 Gewichtsteilen n-Butan und etwa 1 bis etwa 50 Gewichtsteilen H-FKW 365mfc.

17. Verschäumbare Zusammensetzung, die die azeotropartige Zusammensetzung nach Anspruch 1 enthält.

18. Verschäumbare Zusammensetzung, die ein Blähmittel nach Anspruch 10 enthält.

## Revendications

1. Composition de type azéotrope comprenant du 1,1,1,3,3-pentafluorobutane et du n-butane.

2. Composition de type azéotrope selon la revendication 1 **caractérisée par** un point d'ébullition constant à environ -1,64°C ± 4°C à environ 99,30 kPa (14,41 psia).

3. Composition de type azéotrope selon la revendication 1 **caractérisée par** un point d'ébullition constant à environ -1,66°C ± 4°C à environ 99,30 kPa (14,41 psia).

4. Composition de type azéotrope selon la revendication 1 comprenant en outre de l'eau.

5. Composition de type azéotrope selon la revendication 1 constituée essentiellement d'environ 75 à environ 95 parties en poids de n-butane et d'environ 5 à environ 25 parties en poids de HFC-365mfc.

6. Composition de type azéotrope selon la revendication 4 constituée essentiellement d'environ 65 à environ 85 parties en poids de n-butane, d'environ 10 à environ 20 parties en poids de HFC-365mfc et d'environ 5 à environ 15 parties en poids d'eau.

7. Procédé de production d'une mousse comprenant le moussage d'une composition comprenant une composition de type azéotrope selon la revendication 1.

8. Prémélange d'un polyol et d'un agent gonflant contenant une composition selon la revendication 1.

9. Composition de mousse à cellules fermées préparée par moussage d'une composition expansible contenant des compositions de type azéotrope selon la revendication 1.

10. Agent gonflant comprenant une composition de type azéotrope selon la revendication 1.

11. Composition pulvérisable comprenant un matériau à pulvériser et un agent propulseur comprenant une composition de type azéotrope selon la revendication 1.

12. Composition pulvérisable selon la revendication 11 dans laquelle la composition pulvérisable est un aérosol.

13. Composition pulvérisable selon la revendication 12 dans laquelle la composition pulvérisable est un matériau cosmétique.

14. Composition pulvérisable selon la revendication 13 dans laquelle le matériau à pulvériser est un matériau médicinal.

15. Composition réfrigérante comprenant une composition selon la revendication 1.

16. Composition de type azéotrope selon la revendication 1 constituée essentiellement d'environ 50 à environ 99 parties en poids de n-butane et d' environ 1 à environ 50 parties en poids de HFC-365mfc.

17. Composition expansible comprenant la composition de type azéotrope selon la revendication 1.

18. Composition expansible comprenant un agent gonflant selon la revendication 10.
